(19) **Europäisches Patentamt / European Patent Office / Office européen des brevets**

(11) **EP 4 682 186 A1**

(12) **EUROPEAN PATENT APPLICATION**
published in accordance with Art. 153(4) EPC

(43) Date of publication:
**21.01.2026 Bulletin 2026/04**

(21) Application number: **24774491.5**

(22) Date of filing: **08.02.2024**

(51) International Patent Classification (IPC):
$C08J\ 5/00^{(2006.01)}$    $C03C\ 12/00^{(2006.01)}$
$C08K\ 3/40^{(2006.01)}$    $C08K\ 7/00^{(2006.01)}$
$C08K\ 9/00^{(2006.01)}$    $C08L\ 23/10^{(2006.01)}$
$C08L\ 101/00^{(2006.01)}$

(52) Cooperative Patent Classification (CPC):
C03C 12/00; C08J 5/00; C08K 3/40; C08K 7/00;
C08K 9/00; C08L 23/10; C08L 101/00

(86) International application number:
**PCT/JP2024/004376**

(87) International publication number:
**WO 2024/195345 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.03.2023 JP 2023042804**

(71) Applicant: **NIPPON SHEET GLASS COMPANY, LIMITED**
**Tokyo 108-6321 (JP)**

(72) Inventor: **KATO, Shinichi**
**Tokyo 108-6321 (JP)**

(74) Representative: **Cabinet Beau de Loménie**
**103, rue de Grenelle / CS 90800**
**75340 Paris Cedex 07 (FR)**

(54) **RESIN MOLDED ARTICLE**

(57) A resin molded article includes a glass flake and a matrix resin. The glass flakes included in the resin molded article have an average particle size of 0.1 $\mu$m or more and 40 $\mu$m or less and an average thickness of 0.05 $\mu$m or more and 7 $\mu$m or less. A surface of the glass flake is at least partially coated with a surface treatment agent. When a value of mechanical strength of the resin molded article is 100, a relative value $S_N$ of the mechanical strength of the resin molded article satisfies $S_N \geq 100 - 2N$, the relative value $S_N$ being measured after a recycle simulation test is performed N times (N is at least one integer from 1 to 4) using an extruder. The mechanical strength includes at least one selected from the group consisting of maximum tensile strength, maximum flexural strength, and notched Izod impact strength.

EP 4 682 186 A1

**Description**

TECHNICAL FIELD

The present invention relates to a resin molded article, specifically, a resin molded article including glass flakes and a matrix resin.

BACKGROUND ART

It is generally known that fibers such as glass fibers and carbon fibers, glass beads, and flaky substrates such as glass flakes, mica flakes, and talc flakes are used as fillers to be blended in matrix resins in order to achieve, for example, reduction of warping and deformation and/or improvement in mechanical strength of resin molded articles.

For example, Patent Literature 1 proposes a resin molded article formed by molding a glass-reinforced resin composition including a thermoplastic resin (component A), glass flakes (component B), and a surface treatment deactivator (component C).

CITATION LIST

Patent Literature

Patent Literature 1: JP 2012-207075 A

SUMMARY OF INVENTION

Technical Problem

As part of efforts to build a sustainable society, the demand for recycling of resin molded articles has been increasing in recent years. Generally, virgin materials, such as a matrix resin and a mold release agent, in a resin molded article to be recycled are separated to form pellets of a resin composition, and these pellets are subjected to injection molding to produce a recycled molded article. Recycled molded articles are used in various applications, such as use in automobiles, electric machines, and electronic parts. However, there are very high technical and cost barriers to separate a matrix resin and glass flakes from a resin molded article including glass flakes and produce a recycled molded article. Therefore, a pulverization product obtained by pulverizing, without prior processing, a resin molded article including glass flakes is used to produce recycled molded articles. A recycled molded article is commonly produced by subjecting a mixture to injection molding, the mixture being obtained by adding a virgin material, in a certain proportion, to a pulverization product of a resin molded article including glass flakes. However, a recycled molded article produced by using a pulverization product of a resin molded article including glass flakes has the disadvantage of having decreased mechanical properties.

The present invention aims to provide a resin molded article including glass flakes and a matrix resin, the resin molded article being suitable for reducing decrease in mechanical properties due to recycling.

Solution to Problem

In one aspect, the present invention provides a resin molded article including glass flakes and a matrix resin, wherein

the glass flakes included in the resin molded article have an average particle size of 0.1 $\mu$m or more and 40 $\mu$m or less and an average thickness of 0.05 $\mu$m or more and 7 $\mu$m or less,
a surface of the glass flake is at least partially coated with a surface treatment agent,
when a value of mechanical strength of the resin molded article is 100, a relative value $S_N$ of the mechanical strength of the resin molded article satisfies $S_N \geq 100 - 2N$, the relative value $S_N$ being measured after a recycle simulation test is performed N times (N is at least one integer from 1 to 4) using an extruder, and
the mechanical strength includes at least one selected from the group consisting of maximum tensile strength, maximum flexural strength, and notched Izod impact strength.

In another aspect, the present invention provides a resin molded article including glass flakes and a matrix resin, wherein

the glass flakes included in the resin molded article have an average particle size of 0.1 $\mu$m or more and 15 $\mu$m or less and an average thickness of 0.05 $\mu$m or more and 7 $\mu$m or less, and

a surface of the glass flake is at least partially coated with a surface treatment agent.

Advantageous Effects of Invention

The present invention can provide a resin molded article including glass flakes and a matrix resin, the resin molded article being suitable for reducing decrease in mechanical properties due to recycling.

BRIEF DESCRIPTION OF DRAWINGS

FIG. 1 is a schematic diagram illustrating an example of an apparatus for manufacturing glass flakes.
FIG. 2 is a schematic diagram illustrating another example of an apparatus for manufacturing glass flakes.

DESCRIPTION OF EMBODIMENTS

Embodiments of the resin molded article of the present invention will be described below. The following description is not intended to limit the present invention to specific embodiments.

[Background Leading to the Present Invention]

A recycled molded article produced using a pulverization product of a resin molded article including glass flakes has decreased mechanical properties. The present inventor made studies for factors of this and have discovered that the cause was that the glass flakes included in the resin molded article are pulverized during pulverization of the resin molded article in a recycling process, leading to formation of new fracture surfaces in the glass flakes. A surface of a conventional glass flake configured to be included in resin molded articles is at least partially coated with a surface treatment agent so as to reduce decomposition of a matrix resin (e.g., Patent Literature 1). However, a new fracture surface formed in the glass flake by pulverization of the resin molded article is free of the surface treatment agent. It is thought that, because of this, an alkaline component can leach from the fracture surface of the glass flake during kneading and molding at high temperatures in a recycling process, accelerating decomposition of the matrix resin. Decomposition of the matrix resin decreases mechanical properties of a recycled molded article. The present invention was completed in light of the foregoing, and embodiments of the present invention will be described below.

[Resin molded article]

A resin molded article of the present embodiment includes glass flakes and a matrix resin. The glass flakes included in the resin molded article have an average particle size of 0.1 $\mu$m or more and 40 $\mu$m or less and an average thickness of 0.05 $\mu$m or more and 7 $\mu$m or less. A surface of the glass flake is at least partially coated with a surface treatment agent.

In the resin molded article of the present embodiment, when a value of mechanical strength of the resin molded article is 100, a relative value $S_N$ of the mechanical strength of the resin molded article satisfies $S_N \geq 100 - 2N$, the relative value $S_N$ being measured after a recycle simulation test is performed N times (N is at least one integer from 1 to 4) using an extruder. For example, KZW15-30MG (molding temperature: 210°C for C1 to C4 and H1; screw diameter: 15 mm; rotation rate: 300 rpm) manufactured by Technovel Corporation can be used as the extruder. The above mechanical strength includes at least one selected from the group consisting of maximum tensile strength, maximum flexural strength, and notched Izod impact strength. That is, in the resin molded article of the present embodiment, at least one selected from the group consisting of maximum tensile strength, maximum flexural strength, and notched Izod impact strength satisfies $S_N \geq 100 - 2N$.

In the resin molded article of the present embodiment, the glass flakes have an average particle size of 0.1 $\mu$m or more and 40 $\mu$m or less. Conventional glass flakes included in resin molded articles have an average particle size of approximately 50 $\mu$m to approximately 600 $\mu$m. In contrast, the average particle size of the glass flakes included in the resin molded article of the present embodiment is small. Because of this, new fracture surfaces are less likely to be formed in the glass flakes during pulverization of the resin molded article in a recycling process, and leaching of an alkaline component from the fracture surfaces of the glass flakes is reduced in a recycled molded article. This is thought to be the reason why decrease in mechanical properties is reduced. For the resin molded article of the present embodiment, the relative value $S_N$ of the mechanical strength measured after a recycle simulation test is performed N times (N is at least one integer of 1 to 4) using an extruder satisfies $S_N \geq 100 - 2N$, and thus the resin molded article of the present embodiment is suitable for reducing decrease in mechanical properties due to recycling.

The glass flakes included in the resin molded article can be collected by heating the resin molded article in an atmosphere at 625°C and thereby removing the components other than the glass flakes. The average particle size of the glass flakes included in the resin molded article is measured by dispersing the glass flakes collected by the above method in water. In the present specification, the average particle size of the glass flakes refers to a particle size (D50) at which the cumulative volume fraction from the smaller-particle side reaches 50% in the particle size distribution of the glass flakes measured by a laser diffraction scattering method. The average thickness of the glass flakes can be calculated, for example, by measuring thicknesses of 100 or more glass flakes using a scanning electron microscope (SEM) and dividing the sum of the thicknesses by the number of measured glass flakes.

In the present embodiment, the maximum tensile strength of the resin molded article is measured according to JIS K 7161: 2014. The maximum flexural strength of the resin molded article is measured according to JIS K 7171: 2022. The notched Izod impact strength of the resin molded article is measured according to JIS K 7110: 1999.

The above mechanical strength may include the maximum tensile strength, the maximum flexural strength, and the notched Izod impact strength. That is, in the resin molded article of the present embodiment, all of the maximum tensile strength, the maximum flexural strength, and the notched Izod impact strength may satisfy $S_N \geq 100 - 2N$.

The resin molded article may satisfy $S_N \geq 100 - N$. The resin molded article satisfying $S_N \geq 100 - N$ is more suitable for reducing decrease in mechanical properties due to recycling.

The upper limit of the average particle size of the glass flakes included in the resin molded article may be 30 $\mu$m, or 15 $\mu$m. In this case, the glass flakes are even less likely to have new fracture surfaces during pulverization of the resin molded article in a recycling process, and therefore $S_N \geq 100 - 2N$ can be achieved. The upper limit of the average particle size of the glass flakes included in the resin molded article may be 10 $\mu$m, or even 5 $\mu$m.

The lower limit of the average particle size of the glass flakes included in the resin molded article may be 0.2 $\mu$m, 0.5 $\mu$m, or even 1 $\mu$m.

The upper limit of the average thickness of the glass flakes included in the resin molded article may be 5 $\mu$m. The lower limit of the average thickness of the glass flakes included in the resin molded article may be 0.1 $\mu$m.

As described above, the surface of the glass flake included in the resin molded article is at least partially coated with the surface treatment agent. In other words, the glass flake includes the surface treatment agent at least partially coating the surface of the glass flake. A proportion of the surface treatment agent in the glass flake is 0.05 mass% or more and less than 10 mass%. By setting the proportion of the surface treatment agent to 0.05 mass% or more, decomposition of the matrix resin is reduced. By setting the proportion of the surface treatment agent to less than 10 mass%, reduction in dispersibility of the glass flakes due to an excessive amount of the surface treatment agent is prevented.

The proportion of the surface treatment agent in the glass flake may be 8 mass% or less, 5 mass% or less, or even 3 mass% or less.

The surface treatment agent includes, for example, at least one selected from the group consisting of a binder component and a silane coupling agent.

The binder component that can be included in the surface treatment agent is not limited to a particular one, and a known binder component used for surface treatment of glass flakes can be used as appropriate. Regarding the binder component, examples of an organic binder component include methylcellulose, carboxymethyl cellulose, starch, carboxymethyl starch, hydroxyethyl cellulose, hydroxypropyl cellulose, polyvinyl alcohol, acrylic resin, epoxy resin, epoxy-modified polyolefin resin, phenolic resin, vinyl acetate, and urethane resin. Examples of an inorganic binder component include liquid glass, colloidal silica, and colloidal alumina.

The epoxy-modified polyolefin resin is preferably a polyolefin-glycidyl methacrylate copolymer, a polyolefin-allyl glycidyl ether copolymer, or a copolymer composed of a polyolefin on which glycidyl methacrylate or allyl glycidyl ether has been grafted under action of an organic peroxide. An ethylene-glycidyl methacrylate copolymer containing ethylene and glycidyl methacrylate as essential components (in particular, an ethylene-glycidyl methacrylate graft copolymer) is suitably used as the epoxy-modified polyolefin resin. The epoxy-modified polyolefin resin is not limited to these. One epoxy-modified polyolefin resin may be used alone, or a plurality of epoxy-modified polyolefin resins may be used in combination.

Examples of the silane coupling agent that can be included in the surface treatment agent include γ-aminopropyltriethoxysilane, γ-aminopropyltrimethoxysilane, γ-ureidopropyltriethoxysilane, γ-glycidoxypropyltrimethoxysilane, vinyltriethoxysilane, and γ-methacryloxypropyltrimethoxysilane. Among these, γ-aminopropyltriethoxysilane, γ-aminopropyltrimethoxysilane, γ-ureidopropyltriethoxysilane, and γ-glycidoxypropyltrimethoxysilane are suitably used. in addition to the silane coupling agent, a titanium coupling agent, an aluminum coupling agent, a zirconia coupling agent, etc. can also be used.

The surface treatment agent may include an additional component in addition to the above binder component and the above silane coupling agent, if necessary. The surface treatment agent may further include a crosslinking agent.

The surface treatment agent may further include an additional component, such as a urethane resin, a surfactant, and/or an anti-foaming agent, in addition to the above components, if necessary.

The method for coating the surfaces of the glass flakes with the surface treatment agent is not particularly limited, and a known method can be used. It is possible to at least partially coat the surfaces of the glass flakes with the surface treatment agent, for example, by adding a solution of the surface treatment agent to the glass flakes, stirring them, and then drying them. A specific method for accomplishing the addition of the surface treatment agent solution, the stirring, and the drying is not limited to a particular one, and one example thereof will be described hereinafter.

For example, in a mixer such as a rotary disk mixer or a Henschel mixer having a mixing vessel equipped with a rotating blade, a given amount of a binder is added to the glass flakes using a spray or the like while the glass flakes are fluidized. This is followed by mixing and stirring. Then, the glass flakes are dried under stirring in the mixer, or the glass flakes are taken out of the mixer and dried. The surface of the glass flake can be at least partially coated with the surface treatment agent by this method.

In another example, the surface of the glass flake can be at least partially coated with the surface treatment agent by tumbling granulation as described in JP H02(1990)-124732 A. That is, granulation may be performed by placing the glass flakes in a horizontal oscillating granulator equipped with a stirring blade and spraying the surface treatment agent solution onto the glass flakes.

Other than the above examples, the surface of the glass flake can be at least partially coated with the surface treatment agent also by using a known method, such as a method generally called stirring granulation, fluidized bed granulation, injection granulation, or rotary granulation.

The drying step is accomplished, for example, by heating the glass flakes coated with the surface treatment agent to a temperature equal to or higher than the boiling point of the solvent contained in the surface treatment agent solution and drying the glass flakes until the solvent fully evaporates.

The proportion of the surface treatment agent in the glass flakes can be controlled by, for example, adjusting the concentration of the surface treatment agent in the surface treatment agent solution to be added or sprayed. That is, the coated glass flakes having a predetermined proportion of a coating composed of the surface treatment agent can be produced by adding or spraying a predetermined amount of the surface treatment agent solution onto a predetermined amount of the glass flakes so that a predetermined amount of the surface treatment agent is adhered to the glass flakes.

The composition of the glass flakes included in the resin molded article may be commonly known glass composition. Specifically, glass with a low alkali metal oxide content, such as E-glass, can be suitably used, and examples of such glass include glass in which the sum of the $Na_2O$ content and the $K_2O$ content is 2% or less in terms of mass.

The composition of the glass flakes included in the resin molded article may be composition of E-glass.

Typical composition of E-glass is shown below. The unit of the numerical values in the composition below is mass%. That is, the glass flake included in the resin molded article may include the following components in mass%:

$$52 \leq SiO_2 \leq 56;$$

$$12 \leq Al_2O_3 \leq 16;$$

$$16 \leq CaO \leq 25;$$

$$0 \leq MgO \leq 6;$$

$$0 \leq (Na_2O+K_2O) \leq 2;$$

$$5 \leq B_2O_3 \leq 13;$$

and

$$0 \leq F_2 \leq 0.5,$$

wherein $(Na_2O+K_2O)$ preferably satisfies $0 \leq (Na_2O+K_2O) \leq 0.8$.

Alternatively, glass composition of another type of glass with a low alkali metal oxide content can be used, the glass composition including the following components in mass% and substantially free of $B_2O_3$, F, ZnO, BaO, SrO, and $ZrO_2$:

$$59 \leq SiO_2 \leq 65;$$

$$8 \leq Al_2O_3 \leq 15;$$

$$47 \leq (SiO_2-Al_2O_3) \leq 57;$$

$$1 \leq MgO \leq 5;$$

$$20 \leq CaO \leq 30;$$

$$0 < (Li_2O+Na_2O+K_2O) < 2;$$

and

$$0 \leq TiO_2 \leq 5.$$

This glass composition is disclosed by the applicant of the present application in WO 2006/068255 A1. Glass having such glass composition is referred to as "TA-1 glass". Being "substantially free" means that components of interest are not included intentionally except for those inevitably introduced from, for example, industrial raw materials. Specifically, being substantially free of $B_2O_3$, F, ZnO, BaO, SrO, and $ZrO_2$ means that the content of each of them is less than 0.1 mass% (preferably less than 0.05 mass%, and more preferably less than 0.03 mass%).

Furthermore, glass composition of another type of glass can be used, the glass composition including the following components in mass%:

$$60 \leq SiO_2 \leq 75;$$

$$5 < Al_2O_3 \leq 15;$$

$$3 \leq CaO \leq 20;$$

$$6 \leq Na_2O \leq 20;$$

and

$$9 \leq (Li_2O+Na_2O+K_2O) \leq 20.$$

This glass composition is disclosed by the applicant of the present application in WO 2010/024283 A1. Glass having such glass composition is referred to as "TA-2 glass".

The composition of the glass flake is not limited to the glass compositions of E-glass, TA-1 glass, and TA-2 glass as shown above. For example, glass compositions of C-glass, A-glass, ECR glass, and S-glass can also be used. It is also possible to use the glass compositions of low-dielectric glasses disclosed by the applicant of the present application (see JP 6505950 B2, JP 6775159 B2, WO 2020/255396 A1, WO 2020/256142 A1, WO 2020/256143 A1, and WO 2021/049581 A1, for example).

The glass flakes of the present embodiment can be produced by, for example, a so-called blowing method, such as those disclosed in JP S41(1966)-17148 B and JP S45(1970)-3541 B, or a so-called rotary method, such as those disclosed in JP S59(1984)-21533 A and JP H2(1990)-503669 A.

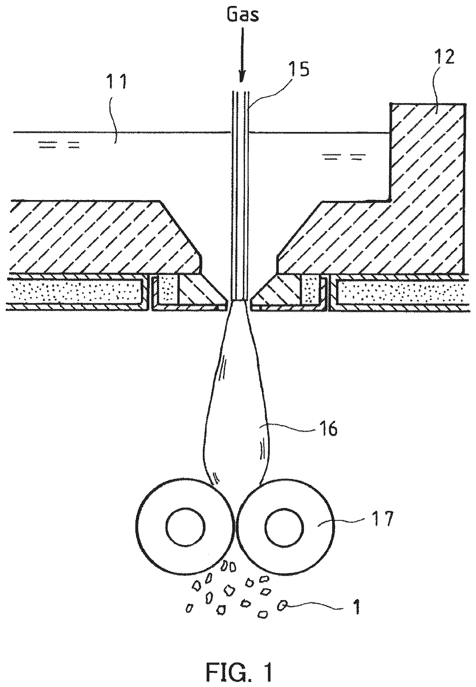

In the blowing method, the glass production apparatus as shown in FIG. 1 can be used. This glass production apparatus includes a fire-resistant furnace tank 12, a blowing nozzle 15, and pressure rolls 17. A glass raw material 11 molten in the fire-resistant furnace tank 12 (melting tank) is inflated into a balloon shape by a gas delivered through the blowing nozzle 15 to form a hollow glass film 16. The hollow glass film 16 is pulverized by the pressure rolls 17 to give glass flakes 1. The thickness of the glass flakes 1 can be controlled by adjusting, for example, the speed of pulling the hollow glass film 16 and the flow rate of the gas delivered through the blowing nozzle 15.

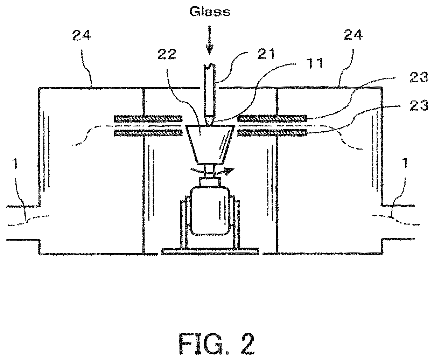

In the rotary method, the glass production apparatus as shown in FIG. 2 can be used. This glass production apparatus includes a pipe 21, a rotary cup 22, a pair of annular plates 23, and an annular cyclone type collector 24. A molten glass raw material 11 is poured into the rotary cup 22 via the pipe 21, caused to flow out radially from the upper edge of the rotary cup 22 by centrifugal force, and then drawn by airflow into the annular cyclone collector 24 through the gap between the annular plates 23. While passing through the gap between the annular plates 23, the glass is cooled and solidified into a thin film, which is further pulverized into fine pieces to give glass flakes 1. The thickness of the glass flakes 1 can be controlled by adjusting, for example, the distance between the annular plates 23 and the speed of the airflow.

The matrix resin included in the resin molded article is, for example, a thermoplastic resin. The thermoplastic resin may be at least one selected from the group consisting of polypropylene, polyethylene, polybutylene terephthalate, polyethylene terephthalate, polycarbonate, polystyrene resin, styrene-acrylonitrile copolymer resin, polyacrylate, styrene-butadiene-acrylonitrile copolymer resin, polyarylene sulfide, polyphenylene sulfide, polyacetal, polyamide, polyamide-imide, liquid crystal polymer, polyetheretherketone, and polyetherimide.

The thermoplastic resin is preferably a decomposition-resistant resin. Specifically, the thermoplastic resin is preferably resistant to decomposition by heat, acids, alkalis, or the like. Examples of such a thermoplastic resin include polypropylene, polyarylene sulfide, polyamide-imide, and fluorine resin. The thermoplastic resin may be polypropylene.

The glass flake content in the resin molded article is preferably 3 to 70 mass%. By setting the glass flake content to 3 mass% or more, the glass flake can fully exhibit its function as a reinforcing material. The resin molded article is produced using a resin composition. On the other hand, by setting the glass flake content to 70 mass% or less, the glass flakes can be dispersed uniformly in the resin composition. In order to further reduce the mold shrinkage ratio, it is more preferable to set the glass flake content to 10 mass% or more and 50 mass% or less.

The resin molded article may include an additional component in addition to the glass flakes and the matrix resin. Examples of the additional component include fillers, such as carbon black fillers, thermoplastic elastomers, stabilizers, antioxidants, and flame retardants. Examples of the stabilizers include phosphorus-based stabilizers and lactone-based stabilizers. Examples of the antioxidants include hindered phenol-based compounds and phosphite-based compounds. Examples of the flame retardants include bromine-based flame retardants, phosphorus-based flame retardants, and silicone-based flame retardants. Two or more of these can be used in combination.

EXAMPLES

The present invention will be described in more detail with reference to examples. **It** is to be noted that the present invention is not limited to the following examples.

[Glass Flakes]

First, molding, pulverization and classification, surface treatment, etc. were performed by the following methods to produce glass flakes of Example 1 and Comparative Example 1 having surfaces at least partially coated with a surface treatment agent.

<Molding>

Glass flakes were produced using E-glass having the composition shown in Tables 1 by the blowing method described above with reference to FIG. 1. Specifically, the E-glass was molten in a melting tank heated at 1200°C or higher. Air was blown into the molten glass through a nozzle to form thin glass, which was continuously drawn out by rollers. The amount of air blown in and the rotation rate of the rollers were adjusted, so that glass flakes having an average thickness of 0.7 μm were obtained.

[Table 1]

| E-glass | (Unit: mass%) |
|---------|---------------|
| $SiO_2$ | 54.7 |
| $Al_2O_3$ | 14.0 |
| CaO | 23.4 |
| MgO | 0.3 |
| $Na_2O$ | 0.4 |
| $K_2O$ | 0.2 |
| $B_2O_3$ | 5.8 |

(continued)

| E-glass | (Unit: mass%) |
|---|---|
| Others | 1.2 |

The average thickness of the glass flakes was calculated by measuring thicknesses of 100 glass flakes using a SEM, dividing the sum of the thicknesses by the number of measured glass flakes, and rounding off the resulting value to one decimal place.

<Pulverization and Classification>

The glass flakes were pulverized using a ball mill, followed by classification to give glass flakes having an average particle size of 5 $\mu$m and glass flakes having an average particle size of 160 $\mu$m. The glass flakes having an average particle size of 5 $\mu$m were used as glass flakes of Example 1. The glass flakes having an average particle size of 160 $\mu$m were used as glass flakes of Comparative Example 1.

Glass flakes do not break in the thickness direction, i.e., the vertical direction. Accordingly, the pulverization did not change the average thickness of the glass flakes.

Examples of the ball mill include tumbling ball mills (such as a pot mill, a tube mill, and a conical mill), vibration ball mills (such as a circular vibration mill, a rotary vibration mill, and a centrifugal mill), and planetary mills.

Although the ball mill was used for the pulverization in the examples, the pulverization method is not limited thereto, and any other pulverization method may be employed, regardless of whether it is a wet method or a dry method. For example, an impact crusher, a gyratory crusher, a cone crusher, a jaw crusher, a roll crusher, a cutter mill, an autogenous mill, a stamp mill, a stone mill, a mortar machine, a ring mill, a roller mill, a jet mill, a hammer mill, a pin mill, a tumbling mill, a vibration mill, a planetary mill, an attritor, or a bead mill can be used alone. These methods may be used in combination as appropriate.

Classification was performed as appropriate by sieve classification. Sieve classification may be achieved by performing sieving two or more times instead of performing single sieving.

For example, dry vibration sieving can be used for sieve classification. For example, glass flakes having a desired D50 can be obtained by first removing particles with particularly large particle size using a sieve with a mesh of equal to or larger than a given size and then further removing particles with next largest particle size using a sieve with a mesh of equal to or smaller than the given size. The mesh sizes of sieves to be used may be selected as appropriate according to the particle size of particles before sieving and an intended D50 of the glass flakes.

Although sieves were used for the classification in the examples, the classification method is not limited to this. Any other classification method may be employed to achieve a desired D50, regardless of whether it is a wet method or a dry method. For example, in classification utilizing a gravitational field, a classification system utilizing a horizontal flow or a vertical upward flow (wet type, hollow tube type, fluidized bed type, or multi-stage bending type) can be used. In classification utilizing an inertial force field, a linear, curved (impactor type), or inclined (louver type or Coanda effect-based) classification system can be used. In classification utilizing a centrifugal field, a natural vortex or forced vortex classification system can be used.

The average particle size (D50) of the glass flakes was measured using a laser diffraction particle size distribution analyzer (model: MT3300EX manufactured by MicrotracBEL Corp.; measurement mode: HRA) for the glass flakes dispersed in water.

<Surface Treatment>

An amount of 5 kg of the glass flakes were placed in a Henschel mixer, and mixed and stirred for 15 minutes while spraying a surface treatment agent solution onto the glass flakes. The surface treatment agent solution was prepared by adding, to water used as a solvent, an ethylene-glycidyl methacrylate copolymer as a binder component and a hydrolyzed solution of $\gamma$-aminopropyltriethoxysilane as a silane coupling agent. Thereafter, the glass flakes in an undried state were taken out from the mixer and dried in a dryer at 125°C for 8 hours. Thus, glass flakes having surfaces at least partially coated with the surface treatment agent were obtained. A glass flake having a surface at least partially coated with a surface treatment agent may be hereinafter referred to as "coated glass flake".

<Calculation of Silane Coupling Agent Content>

For the dried surface-treated coated glass flakes, a calculated content of the silane coupling agent was determined.

<Calculation of Binder Content>

For the dried surface-treated coated glass flakes, a calculated content of the binder was determined.

<Deposit Ratio of Surface Treatment Agent>

A deposit ratio of the surface treatment agent was evaluated by the Loss-on-Ignition method. In the present embodiment, the deposit ratio of the surface treatment agent refers to a proportion of the coating formed of the surface treatment agent in the coated glass flakes. Specifically, an appropriate amount of the coated glass flakes were dried at 110°C, and then heated in an atmosphere at 625°C to remove the surface treatment agent from the surfaces of the coated glass flakes. The deposit ratio of the surface treatment agent in the coated glass flakes was calculated from the difference between the mass of the coated glass flakes before being heated and the mass of the glass flakes after being heated.

[Example 1, Comparative Example 1]

Table 2 shows the measured values and the calculated values for the coated glass flakes of Example 1 and Comparative Example 1.

[Table 2]

|  | Example 1 | Comparative Example 1 |
|---|---|---|
| Average thickness of glass flakes (μm) | 0.7 | 0.7 |
| D50 of glass flakes (μm) | 5.0 | 160 |
| Composition of glass flakes | E | E |
| Deposit ratio of surface treatment agent (mass%) | 0.6 | 0.6 |
| Coupling agent content (mass%) | 50 | 50 |
| Binder content (mass%) | 50 | 50 |

[Resin Molded Article]

Next, resin molded articles of Example 1 and Comparative Example 1 were each obtained through molding by the following method. Polypropylene (NOVATEC BC06C manufactured by Japan Polypropylene Corporation) was used as a matrix resin. The coated glass flakes and the polypropylene were mixed to homogeneity in proportions of 30 mass% and 70 mass%, respectively. The resulting mixture was kneaded in an extruder (KZW15-30MG manufactured by Technovel Corporation; molding temperature: 210°C for C1 to C4 and H1; screw diameter: 15 mm; rotation rate: 300 rpm; screw load: 6.8 A; resin pressure: 1.0 to 1.1 MPa) under molding conditions for polypropylene to give a resin composition including the polypropylene as a matrix resin and the coated glass flakes as a reinforcing filler. Note that neither a stabilizer nor an antioxidant were added. This resin composition was molded using an injection molding machine (HM7 manufactured by Nissei Plastic Industrial Co., Ltd.; molding temperature: 190 to 200°C) and was then dried to give a resin molded article.

<Recycle Simulation Test>

A recycle simulation test was performed in which each resin molded article was subjected to extrusion molding using an extruder (KZW15-30MG manufactured by Technovel Corporation; molding temperature: 210°C for C1 to C4 and H1; screw diameter: 15 mm; rotation rate: 300 rpm; screw load: 6.8 A; resin pressure: 1.0 to 1.1 MPa). The number of extrusion cycles was defined as the number (N) of recycle simulation tests. In extrusion molding, a matrix resin is molten by heating, and a high shear force is applied to a resin molded article in a kneading portion called a kneading zone. From this, it is inferred that a larger load is applied to a resin molded article in extrusion molding than in pulverization and injection molding for production of a recycled molded article. Therefore, in the examples, the resin molded articles having undergone the recycle simulation test were regarded as resin molded articles having undergone a recycling process.

<Calculation of Glass Flake Content in Resin Molded Article>

The glass flake content in each resin molded article was evaluated by the Loss-on-Ignition method. Specifically, an appropriate amount of the resin molded article was heated in an atmosphere at 625°C to remove the components other than the glass flakes, and the glass flake content in the resin molded article was calculated from the difference between the mass of the resin molded article before being heated and the mass of the residue (glass flakes) remaining after the heating.

<Measurement of Particle Size Distribution by Laser Diffraction Scattering Method>

The measurement of the particle size distribution by the laser diffraction scattering method was performed for the glass flakes obtained as the residue through the process for calculating the glass flake content in each resin molded article. Specifically, the glass flakes were dispersed in water and the particle size distribution was measured using a laser diffraction particle size distribution analyzer (model: MT3300EX manufactured by MicrotracBEL Corp.; measurement mode: HRA). The value of D50 of the glass flakes in the resin molded article was obtained from the measurement result.

In the particle size distribution, D50 is defined as a particle size at which the cumulative volume fraction from the smaller-particle side reaches 50%.

<Measurement of Property Values of Resin Molded Article>

The maximum tensile strength of each resin molded article was measured according to JIS K 7161: 2014. The maximum flexural strength of each resin molded article was measured according to JIS K 7171: 2022. The notched Izod impact strength of each resin molded article was measured according to JIS K 7110: 1999.

<Calculation of Weight-Average Molecular Weight of Resin Molded Article>

A weight-average molecular weight Mw of each resin molded article was measured by gel permeation chromatography (GPC). As a GPC apparatus, HLC-8321GPC/HT manufactured by Tosoh Corporation was used. Two separation columns, TSKgel GMH6-HT (7.5 x 300 mm) manufactured by Tosoh Corporation, were used, and the column temperature was set at 140°C. As a measurement solvent, o-dichlorobenzene was used. The specimen concentration was 1.0 mg/mL, and the specimen injection volume was 400 microliters. A differential refractometer was used as a detector. The weight-average molecular weight Mw was calculated using a calibration curve of a polystyrene specimen having a known molecular weight.

[Example 1, Comparative Example 1]

Table 3 shows the measured values and the calculated values for the resin molded articles of Example 1 and Comparative Example 1 and those for the resin molded articles having undergone the recycle simulation test.

[Table 3]

| | Example 1 | | | | | Comparative Example 1 | | | | |
|---|---|---|---|---|---|---|---|---|---|---|
| | Number (N) of recycle simulation tests | | | | | Number (N) of recycle simulation tests | | | | |
| | 0 | 1 | 2 | 3 | 4 | 0 | 1 | 2 | 3 | 4 |
| Glass flake content in resin molded article (mass%) | 30 | 30 | 30 | 30 | 30 | 30 | 30 | 30 | 30 | 30 |
| D50 of glass flakes in resin molded article (μm) | 4.8 | 4.8 | 4.7 | 4.7 | 4.7 | 42.1 | 41.0 | 39.9 | 39.4 | 38.6 |

(continued)

| | Example 1 | | | | | Comparative Example 1 | | | | |
|---|---|---|---|---|---|---|---|---|---|---|
| | Number (N) of recycle simulation tests | | | | | Number (N) of recycle simulation tests | | | | |
| | 0 | 1 | 2 | 3 | 4 | 0 | 1 | 2 | 3 | 4 |
| Relative value when maximum tensile strength of resin molded article at N = 0 is 100 | 100.0 | 99.1 | 98.4 | 98.1 | 95.9 | 100.0 | 92.9 | 90.4 | 88.2 | 86.1 |
| Relative value when maximum flexural strength of resin molded article at N = 0 is 100 | 100.0 | 100.0 | 99.8 | 99.5 | 99.3 | 100.0 | 92.7 | 90.2 | 88.3 | 86.3 |
| Relative value when Izod impact strength N* of resin molded article at N = 0 is 100 | 100.0 | 100.0 | 99.7 | 99.7 | 99.0 | 100.0 | 94.2 | 74.7 | 74.2 | 58.7 |
| Weight-average molecular weight Mw | 219,000 | - | 200,000 | - | 182,000 | 220,000 | - | 191,000 | - | 164,000 |
| Note *: Notched | | | | | | | | | | |

As shown in Tables 2 and 3, in Example 1, although the average particle size of the glass flakes slightly decreased from 5.0 $\mu$m to 4.8 $\mu$m during the production of the resin molded article, the average particle size of the glass flakes included in the resin molded article hardly varied thereafter by repeating the recycle simulation test (N = 1 to 4). On the other hand, in Comparative Example 1, the average particle size of the glass flakes greatly decreased from 160 $\mu$m to 42.1 $\mu$m during the production of the resin molded article, and the average particle size of the glass flakes included in the resin molded article further decreased thereafter by repeating the recycle simulation test (N = 1 to 4).

As shown in Table 3, for the resin molded article of Example 1, all relative values of the maximum tensile strength, the maximum flexural strength, and the notched Izod impact strength of the resin molded article having undergone the recycle simulation test N times (N = 1 to 4) satisfy 100 - 2N. The reason for this is thought to be that, in the resin molded article of Example 1, owing to the small average particle size of the glass flakes, new fracture surfaces were less likely to be formed in the glass flakes during the recycle simulation test and thus leaching of the alkaline components from fracture surfaces of the glass flakes in the resin molded article having undergone the recycle simulation test was reduced.

As shown in Table 3, a decrease of the weight-average molecular weight of the resin molded article having undergone the recycle simulation test N times (N = 1 to 4) was reduced more for the resin molded article of Example 1 than for the resin molded article of Comparative Example 1. The reason for this is thought to be that, in the resin molded article of Example 1 having undergone the recycle simulation test, leaching of the alkaline components from fracture surfaces of the glass flakes was reduced and therefore decomposition of the matrix resin was reduced.

From the above results, the resin molded article of Example 1 is suitable for reducing decrease in mechanical properties due to recycling.

INDUSTRIAL APPLICABILITY

The resin molded article of the present invention is suitable for reducing decrease in mechanical properties due to recycling, and is therefore suitably used in various applications, such as use in automobiles, electric machines, and electronic parts.

**Claims**

1. A resin molded article comprising glass flakes and a matrix resin, wherein

   the glass flakes included in the resin molded article have an average particle size of 0.1 $\mu$m or more and 40 $\mu$m or less and an average thickness of 0.05 $\mu$m or more and 7 $\mu$m or less,
   a surface of the glass flake is at least partially coated with a surface treatment agent,
   when a value of mechanical strength of the resin molded article is 100, a relative value $S_N$ of the mechanical strength of the resin molded article satisfies $S_N \geq 100 - 2N$, the relative value $S_N$ being measured after a recycle simulation test is performed N times (N is at least one integer from 1 to 4) using an extruder, and
   the mechanical strength includes at least one selected from the group consisting of maximum tensile strength, maximum flexural strength, and notched Izod impact strength.

2. The resin molded article according to claim 1, wherein the mechanical strength includes maximum tensile strength, maximum flexural strength, and notched Izod impact strength.

3. The resin molded article according to claim 1, satisfying $S_N \geq 100 - N$.

4. The resin molded article according to claim 1, wherein
   the average particle size of the glass flakes included in the resin molded article is 15 $\mu$m or less.

5. The resin molded article according to claim 1, wherein a proportion of the surface treatment agent in the glass flake is 0.05 mass% or more and less than 10 mass%.

6. The resin molded article according to claim 1, wherein the glass flake included in the resin molded article includes the following components in mass%:

$$52 \leq SiO_2 \leq 56;$$

$$12 \leq Al_2O_3 \leq 16;$$

$$16 \leq CaO \leq 25;$$

$$0 \leq MgO \leq 6;$$

$$0 \leq (Na_2O+K_2O) \leq 2;$$

$$5 \leq B_2O_3 \leq 13;$$

and

$$0 \leq F_2 \leq 0.5.$$

7. The resin molded article according to claim 1, wherein the matrix resin is a thermoplastic resin.

8. The resin molded article according to claim 7, wherein the thermoplastic resin is polypropylene.

9. A resin molded article comprising glass flakes and a matrix resin, wherein

the glass flakes included in the resin molded article have an average particle size of 0.1 $\mu$m or more and 15 $\mu$m or less and an average thickness of 0.05 $\mu$m or more and 7 $\mu$m or less, and
a surface of the glass flake is at least partially coated with a surface treatment agent.

FIG. 1

FIG. 2

## INTERNATIONAL SEARCH REPORT

| International application No. |
|---|
| **PCT/JP2024/004376** |

| A. | CLASSIFICATION OF SUBJECT MATTER |
|---|---|

*C08J 5/00*(2006.01)i; *C03C 12/00*(2006.01)i; *C08K 3/40*(2006.01)i; *C08K 7/00*(2006.01)i; *C08K 9/00*(2006.01)i; *C08L 23/10*(2006.01)i; *C08L 101/00*(2006.01)i
FI:   C08J5/00 CES; C03C12/00; C08K3/40; C08K7/00; C08K9/00; C08L23/10; C08L101/00

According to International Patent Classification (IPC) or to both national classification and IPC

| B. | FIELDS SEARCHED |
|---|---|

Minimum documentation searched (classification system followed by classification symbols)

C08J5/00-5/02; C08J5/12-5/22; C03C1/00-14/00; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 6427724 B1 (NIPPON SHEET GLASS COMPANY, LIMITED) 21 November 2018 (2018-11-21)<br>claims, paragraphs [0045], [0058], tables 1-3, examples | 1-9 |
| A | JP 2018-115107 A (NIPPON SHEET GLASS COMPANY, LIMITED) 26 July 2018 (2018-07-26)<br>entire text | 1-9 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **09 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/004376**

| Patent document cited in search report | | | Publication date (day/month/year) | Patent family member(s) | | | Publication date (day/month/year) |
|---|---|---|---|---|---|---|---|
| JP | 6427724 | B1 | 21 November 2018 | US | 2020/0055767 | A1 | |
| | | | | claims, paragraph [0072], tables 1-3 | | | |
| | | | | EP | 3632860 | A1 | |
| | | | | CN | 110678424 | A | |
| JP | 2018-115107 | A | 26 July 2018 | US | 2019/0233619 | A1 | |
| | | | | claims, examples, drawings | | | |
| | | | | EP | 3505561 | A1 | |
| | | | | CN | 109689760 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012207075 A
- JP H021990124732 A
- WO 2006068255 A1
- WO 2010024283 A1
- JP 6505950 B
- JP 6775159 B
- WO 2020255396 A1
- WO 2020256142 A1
- WO 2020256143 A1
- WO 2021049581 A1
- JP 41196617148 S
- JP 4519703541 S
- JP 59021533 S
- JP H21990503669 A